# EUROPEAN PATENT SPECIFICATION

(11) **EP 0 714 360 B1**
(45) Date of publication and mention of the grant of the patent: **07.06.2000**
(21) Application number: 94923839.8
(22) Date of filing: 18.08.1994
(51) Int. Cl.: B62D 57/028, B62D 61/12, B62D 61/10, B62D 49/08

(54) **SYSTEM TO BE APPLIED TO A UNIVERSAL LAND ROVER WITH TRACTION MEANS MOUNTED ON ARTICULATED ARMS**
SYSTEM ZUR VERWENDUNG BEI EINEM UNIVERSALEN GELÄNDEFAHRZEUG MIT AN GELENKARMEN MONTIERTEN ANTRIEBSEINRICHTUNGEN
SYSTEME DESTINE A UN VEHICULE TOUT TERRAIN DONT LES MOYENS DE TRACTION SONT MONTES SUR DES BRAS ARTICULES

(30) Priority: 19.08.1993 PT 10134093
(43) Date of publication of application: 05.06.1996
(73) Proprietor: Nery de Oliveira, Fernando José, P-2750 Cascais (PT)
(72) Inventor: Nery de Oliveira, Fernando José, P-2750 Cascais (PT)
(74) Representative: Pereira da Cruz, Joao
(86) International application number: PT9400008
(87) International publication number: WO9505303

(56) References cited:
- WO-A-85/02361
- BE-A- 569 442
- FR-A- 2 395 160
- GB-A- 2 030 528
- US-A- 3 642 085
- US-A- 3 842 926

## Description

The present invention relates to a system to be applied to a universal land rover.

Land rovers are designed to travel over land where there are no roads or man-made structures. However, in general, they cannot overcome single obstacles, i.e. tracks where the longitudinal section has discontinuous points like steps, narrow walls, fences, ditches, etc. conventional land rovers only can overcome said obstacles when they have dimensions somewhat smaller than the radius of the respective motor wheels.

Even when the obstacles are sloping there is a limit for overcoming the respective inclination angle, which varies from vehicle to vehicle according to the attack angle, which, in general, is less than 45°.

Even caterpillar vehicles have limitations with regard to the caterpillar height and there is the same problem with the attack angle above 60°. For example, for a caterpillar vehicle with 1 metre caterpillar height, a ditch of 1,5 X 1,5 m with a U profile is an obstacle that cannot be overcome.

The present invention relates to a vehicle where a locomotion system of the same type as animal traction is combined with a conventional rotary fraction system. The rotary system does not spontaneously exist on earth without being activated by man.

Thus, the object of the invention is to profit from the advantages of both systems, while reducing as much as possible the unsuitability that each system separately presents.

### BACKGROUND TO THE INVENTION

Some special patented vehicles that somehow wish to overcome the above described unsuitability of conventional vehicles are known from prior art. However, mention will only be made of patent US-A-3 642 085 because it is a recent one and presents the most realistic and most similar solution to the contained in the present patent.

This patent refers to a multiple wheeled vehicle for movement over rough terrain wherein the load carrying portion or body thereof remains stabilized in a substantially horizontal position in both the longitudinal and transverse direction thereof, regardless of the contour of the terrain over which the vehicle is travelling.

In fact, patent US-A-3 642 085 discloses a vehicle with 6 motor wheels with arms that have one articulation in the middle of each one, this articulation being positioned like a compass with the bisector in general in a horizontal position.

However, this vehicle also has great difficulties in overcoming narrow walls or fences without resting over them and consequently destroying them.

Furthermore, they can only overcome ditches whose span is less than the distance between a pair of adjacent wheels.

In this patent nothing is explained that makes it possible to understand how the following is controlled and commanded simultaneously:
- raising and lowering of 6 wheels in order to adjust them to uneven land, since the hydraulic system that commands the elevation arms is normally excessively inflexible.
- the 6 wheel traction with independent motors.
- driving the vehicle with 6 independent motor wheels.

It must also be considered that the above 3 functions must move the 6 wheels in 3 dimensions.

Under this conditions, in this US patent we are much newer to ideal principles than to a vehicle that can effectively be realized.

The preamble to claim 1 of the invention is based on this document and on other prior art.

### AIM OF THE INVENTION

The vehicle proposed in this patent application is intended to be utilized with the following finalities:
- to overcome single obstacles that result from discontinuities of longitudinal profile in the wheel track that can be different at each side of the vehicle;
- to provide a link between areas with a minimum amount of man-made organization and areas with a fairly high density of individual obstacles.

The individual obstacles (steps, narrow walls, ditches, etc.) can arise in different conditions, namely:
- naturally in mountainous regions;
- in regions with any population density as a result of natural catastrophes like earthquakes, or catastrophes caused by man in a war situation or any other causes;
- in agricultural areas with very steep slopes;
- in urbanized areas where there are steps that must be overcome by paraplegic users.

### GENERAL DESCRIPTION OF THE INVENTION

The present invention has traction rotary systems mounted at the end of the articulated arms, thus with a rhombohedral arrangement as defined in claim 1, the rotary systems being driven by any motorized system.

For this purpose, the height of the arms at the extremity of which the wheels are arranged is independently commanded, thus allowing the vehicle of the invention to move over significantly uneven terrain between any of the four vehicle wheels without a risk of losing balance since it is suitably controlled and commanded.

Obviously there are limitations to the obstacles that can be overcome, the limits thereof depending on several characteristics which are specific to the vehicle design for a certain finality. But in any case the obstacles that can be surmounted are much bigger than those which can be overcome by any other conventional vehicle that currently exists, taking into consideration the fact that the wheel dimension of the vehicle embodiment is similar to that of the vehicle that is used as a comparison.

Considering that it is basically a vehicle that moves on wheels, it can travel anywhere conventional vehicles do; it can even travel over tarred roads or roads with any other type of surface, since there is no caterpillar system which normally damages road paving. When the vehicle is intended to move over any kind of land without singular obstacles, it will do so like any other land rover vehicle until it detects a singular obstacle that cannot be normally surmounted by the vehicle's wheels.

When faced with a singular obstacle (step, narrow wall, ditch), the arm command system, at the end of which the wheels are mounted, will be activated and the wheels will go up or down according to the type of obstacle. The arm command system will preferably be hydraulic but it can also be electrical, mechanical or mixed, and it can also be helped by electronic means or even by a computer. Apart from overcoming singular obstacles, the hydraulic system will be used in combination with a conventional vehicle suspension system.

It is also possible to consider other wheels operated by hydraulic jacks that help the vehicle to go either up or down, or to keep it level, possibly in an automatic way. These wheels do not need to be motor wheels, but it is very important that they have brakes which will be useful when it is necessary to step down the obstacles.

In any of the embodiments, a retractable bar or blade system installed on each of the wheel's hubs may be considered in order to increase adherence to the ground, either because the ground is too steep for the conventional traction means or because the ground has a very weak consistency as in the case of mud, sand or snow, or even if locomotion must be carried out on water.

Let us examine in more detail some of the various possible solutions and some of the combinations thereof related to either the traction systems or the arm articulated system.

The driving system of the wheels can be electrical, mechanical, hydraulic or mixed, depending on the use of the vehicle and on its working conditions.

If electric or hydraulic engines are used, they can be mounted near the traction wheels, acting directly or indirectly on said wheels' axle.

If the power is supplied only by a combustion engine it will preferably be installed on the main body of the vehicle, the power being transmitted to the wheels by a relatively complex cinematic chain.

The arm articulation system could consist only of a system which guarantees rotation around an axle fixed to the vehicle's main body or which besides this system, has another intermediate articulation, such that each arm comprises two parts that can articulate between them.

There is hardly a better system than the hydraulic one for operating the arm rotation, as it is a system that is quite technologically developed in its different applications, in general and particularly in the family of backhoe machines. In any case, other systems may be used, namely the electrical converter, which converts rotary movement into linear movement.

The preferable embodiment has only 4 wheels in a rhombohedral (diamond shape) arrangement as defined in claim 1 that is extremely simple mechanically and simultaneously has a good performance, taking into consideration the fact that it is important to prevent the vehicle's center of gravity from falling outside its supporting base during the different steps necessary to overcome the aforementioned singular obstacles.

The diamond shape (rhombhoedral) wheel arrangement is especially adapted for locomotion in areas with a great density of obstacles, said obstacles being so high that it is not possible to surmount them with any vehicle, for example areas covered with either high trees or big rocks that are simultaneously high and have short spacing. As this embodiment corresponds to a very narrow vehicle, it can pass between such very high obstacles. However, it simultaneously loses transport and lifting capacity.

The articulation in a vertical compass, i.e. with the bisector generally in a vertical position, is an original arrangement in relation to any of the other patents, and it is essential to overcome certain obstacles, namely ditches, narrow walls or fences where the vehicle cannot make surmount them without destroying them.

The natural ditches that cannot be overcome by conventional vehicles are not very common or frequent in Nature. However, as is known in the art, ditches with square angles are artificial obstacles that are very efficient against tanks.

The movement between arms like vertical compass legs is quite useful to overcome ditches. However, the preferable embodiment represented here can overcome not very wide ditches because it is intentionally an embodiment with reduced dimensions.

In order to increase the dimension of the obstacles that can be overcome by the vehicle of the invention it will be necessary to increase its dimensions in general and also the diameter wheels.

The dimension increase is possible retaining all the claimed characteristics of the invention. However, over certain dimensions it will be convenient to consider 4 lateral wheels instead of 2, the main geometrical arrangement becoming the composition of a rectangle with two isosceles triangles, which obviously falls within the scope of the claims of this patent claims.

On other hand, it is possible to consider a more simple embodiment excluding the required arm movement of the front and rear wheels of the vehicle shown in pictures 1 and 2.

In this case, it is possible to have one embodiment that is very similar to a very practical vehicle for urban spaces, since it has small dimensions in general and it is very narrow, which is very useful in order to move and park in urban spaces. Its elevation performers will be reduced but it will be able to overcome bigger obstacles then the conventional vehicles, since it also has jacks in lateral wheels that allow the vehicle to go up and down certain obstacles.

Furthermore, high speed is today more than ever a requirement that must always be taken into consideration, particularly in military or lifesaving operations in war, accidents or catastrophe situations.

In practice, single obstacles (areas where the longitudinal section track presents discontinued points) represent by definition a small percentage of the whole area of land to be covered, meaning that it is important for any vehicle to be able to move quickly in areas where there are no singular obstacles.

All the vehicles of the other patent, namely the vehicle of patent US-A-3 642 085, have some difficulty in moving fast where there are no singular obstacles. Normally this vehicle has hydraulic motors that present serious problems when they must deliver high speeds and power simultaneously.

The vehicle of the embodiment that will be described below is very agile and simple, allowing it to move fast over common land without single obstacles. Its transport capabilities are not very great but, as explained above, it is very easy to increase these capabilities by increasing the general dimensions and increasing the lateral wheels from 2 to 4.

### BRIEF DESCRIPTION OF THE DRAWINGS

For an easier understanding of the invention and of the following description, a set of drawings are attached hereto.
Figure 1 is a side elevation of the rhombohedral (diamond shape) embodiment.
Figure 2 is a front elevation of the rhombohedral (diamond shape) embodiment.

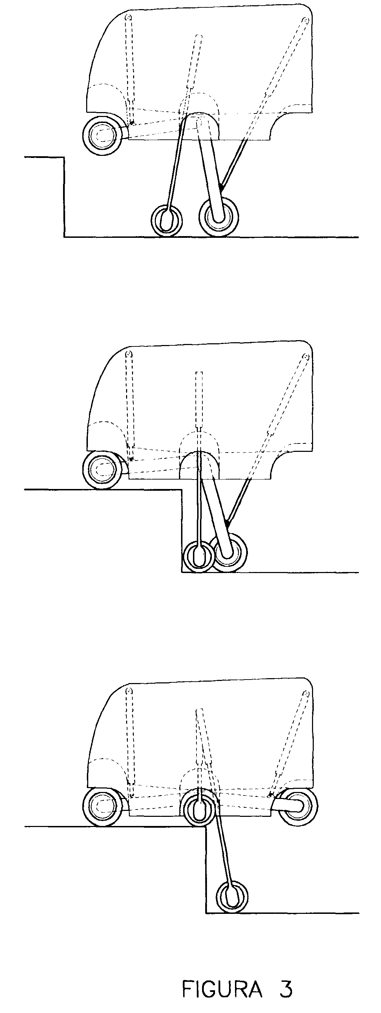

Figure 3 briefly illustrates an operation sequence necessary to overcome a high obstacle by a vehicle, according to the above embodiment of Figures 1 and 2.

### DETAILED DESCRIPTION OF THE EMBODIMENTS

The object of the present invention is to solve and/or minimize the above-mentioned drawback of the other patented vehicles.

For this purpose, the following main characteristics have been assigned to the preferred embodiment: diamond shape wheel arrangement and arm movement like compass legs with the bisector in a general vertical position.

There are many different possible embodiments when the vehicle uses different types of power origin, different types of articulation and different types of power transmission systems either to the wheels or to the arm movements.

The description that follows will be restricted to the diamond shape (rhombohedral) arrangement because it is quite different from the other patent embodiments, namely to the vehicle of patent US-A-3 642 085.

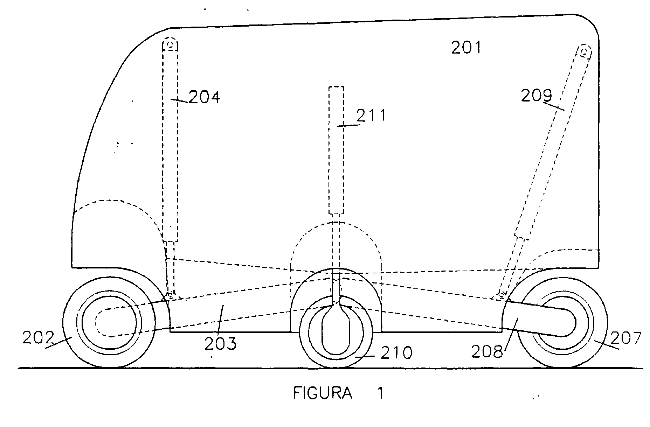

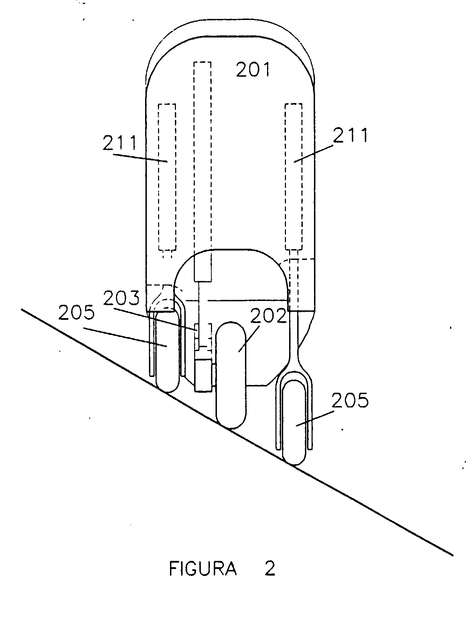

The main body is referred to in general by the numeral (201) in Figures 1 and 2. The main mechanisms, such as the engine, gear box and differential gear between the front and rear wheel, will be located on the lower part of the main body vehicle, but they are not represented.

In the embodiment shown in Figures 1 and 2 the wheels are mounted on the lozenge's vertices. On it, the outer wheels (202 and 207), which are aligned with the longitudinal axle of the vehicle, are mounted at the ends of the articulated arms (203 and 208) being activated by the jacks (204 and 209). The wheels (202 and 207) can be driven with any cinematic chains, but preferably inside arms (203 and 208).

The side wheels (205 and 210) cannot be motor wheels for reasons of simplicity and economy. However, it is always necessary for all the wheels to have good brakes, because they are very important in general for overcoming obstacles and, in particular, for going down slopes.

The side wheels (205 and 210) must be moved up and down by the action of jacks (206 and 211), in order to approach or to withdraw them from the main body (201) vehicle, as shown in Figure 2.

This movement along the longitudinal jack axle of the lateral wheels (205, 210) makes it possible either to level the vehicle when it moves over inclined land (as shown in Figure 2) or to incline the vehicle in relation to horizontal land when the vehicle is following a bend in a good road, thus helping the vehicle to have dynamic behaviour similar to motorcycles.

The lateral wheels (205, 210) can also be motor wheels, but in this case there are advantages if the corresponding engines are independent of the main one of the longitudinal wheels (202, 207). In this case, it is easier to decide when the corresponding engines are put into operation or not, especially when it is necessary to surmount very uneven obstacles. In the case of independent engines for lateral wheels (205, 210), it is preferable that these be electrical or hydraulic engines

The embodiments that have been described above have been given only by way of non-restrictive examples, so that any changes, either in form or in size and wheel quantity, leading to a vehicle with the characteristics described in the attached claims, must be understood as being covered by the present patent. The present invention will only be limited by the scope of the following claims.

## Claims

1. Locomotion system for a vehicle comprising a pivotally support means for each wheel to provide substantially independent up and down movement for each wheel allowing that the main body is always in a conveniently balanced position, that enables it to move over any type of terrain, namely:
• on terrain with single obstacles, namely steps, narrow walls, fences or ditches;
• on conventional roads and/or uneven terrain without single obstacles, if necessary with the dynamic behaviour of 2 wheel vehicles;
characterized in that the locomotion system comprises at least a four wheel system (202, 207, 205, 210), the wheels being arranged in such a way that a single front wheel (202) and a single rear (207) wheel are aligned with a longitudinal axis of the vehicle and the front and rear wheels are each mounted at the end of an articulated arm (203, 208) which is activated by a jack (204, 209) and in that the side wheels (205, 210) are arranged on opposite lateral sides of the vehicle between the front and rear wheel, the side wheels each being mounted at the end of the jack's arm (206, 211).

2. Locomotion system for a vehicle according to claim 1 wherein the relative movement of all the arms is similar to the leg movement of a vertical compass, i.e. a compass with the bisector in a generally vertical position.

## Patentansprüche

1. Fortbewegungsvorrichtung für ein Fahrzeug, ein schwenkendes Mittel für jedes Rad aufweisend, wobei die Räder sich unabhängig voneinander auf und ab bewegen, sodass der Haupabschnitt des Fahrzeuges sich immer in einer vorteilhaften ausgeglichenen Lage befindet die es erlaubt sich über allerlei Bodenflächen zu bewegen, namentlich:
• auf ungleichmässigen Bodenflächen wie, z.B. Stufen, enge Mauern, Zäune oder Gräber;
• auf konventionellen Fahrstrassen und/oder ungleichmässigen Böden ohne Hindernisse, wenn erfordlich mit dem dynamischen Betragen eines zwei Rad Fahrzeuges;
dadurch gekennzeichnet dass die Fortbewegungsvorrichtung mit mindestens einem Vierradsystem (202, 207, 205, 210)versehen ist, wobei die Räder so angeordnet sind dass eines der Vorderräder (202) und eines der Hinterräder (207) sich nach einer der Längsachsen des Fahrzeuges ausrichten und wobei Vorder- und und Hinterrad jeweils am Ende eines mit Hilfe einer Hebewinde (204,209) aktiviertes Gelenkarmes (203,208) gelagen sind, und dass die Seitenräder (205,210) auf den gegenüberliegenden Seiten des Fahrzeuges, zwischen dem Vorder- und dem Hinterrad, jeweils am Ende des Armes (206,211) angeordnet sind.

2. Fortbewegungsvorrichtung nach Anspruch 1, dadurch gekennzeichnet dass die relative Bewegung aller Arme ähnlich der Bewegung eines senkrechten Kompasses ist, d.h. ein Kompass in welchem die Halbierungslinie, im algemeinem, in einer senkrechten Richtung verläuft.

## Revendications

1. Système de locomotion pour un véhicule constitué d'un moyen d'appui central pour chaque roue afin de permettre un mouvement vers le haut et vers le bas substantiellement indépendant pour chaque roue, afin que la carrosserie principale maintienne une position convenablement équilibrée lui permettant de se déplacer sur tout type de terrain:
• sur un terrain avec des obstacles seuls, notamment les marches, les murs étroits, les clôtures ou les fossés;
• sur les routes conventionnelles et/ou un terrain irrégulier sans obstacles seuls, avec le comportement dynamique des véhicules à deux roues si nécessaire;
caractérisé par le fait que le système de locomotion comprend au moins un système de quatre roues (202, 207, 205, 210), les roues ayant une disposition par laquelle une seule roue avant (202) et une seule roue arrière (207) sont alignées sur l'axe longitudinal du véhicule et les roues avant et arrière sont montées toutes les deux à l'extrémité d'un bras articulé (203, 208), qui est activé par le moyen d'un cric (204, 209), et par le fait que les roues latérales (205, 210) sont disposées de côtés latéraux opposés du véhicule entre la roue avant et arrière, les roues latérales étant montées à l'extrémité du bras du cric (206, 211).

2. Système de locomotion pour un véhicule selon la lère revendication, dans lequel le mouvement relatif de tous les bras est semblable au mouvement du bras d'un compas vertical, c'est-à-dire un compas dont la bissectrice se trouve dans une position généralement verticale.
